# FASCICULE DE BREVET EUROPEEN

(11) **EP 4 167 044 B1**
(45) Date de publication et mention de la délivrance du brevet: **22.01.2025**
(21) Numéro de dépôt: 22201023.3
(22) Date de dépôt: 12.10.2022
(51) Int. Cl.: G05D 1/00

(54) **SYSTÈME D'AIDE AU VOL EN FORMATION D'AÉRONEFS**
FLUGHILFESYSTEM FÜR FORMATIONSFLUG
AIRCRAFT FLIGHT ASSISTANCE SYSTEM FOR FORMATION FLYING

(30) Priorité: 13.10.2021 FR 2110835
(43) Date de publication de la demande: 19.04.2023
(73) Titulaire: Airbus SAS, 31700 Blagnac (FR)
(72) Inventeur: TA, Guillaume, 31700 Blagnac (FR); FROT, Clément, 31700 Blagnac (FR); BECK, Jonathan, 31700 Blagnac (FR)
(74) Mandataire: Cabinet Le Guen Maillet

(56) Documents cités:
- FR-A1- 3 049 076
- FR-A1- 3 079 942
- US-A1- 2003 222 795

## Description

### DOMAINE TECHNIQUE

La présente invention concerne un système d'aide au vol en formation d'aéronefs. Plus particulièrement, la présente invention concerne un système d'aide au positionnement d'un aéronef suiveur par rapport à un tourbillon de sillage (aussi appelé tourbillon marginal) d'un aéronef meneur lors d'un vol en formation.

### ETAT DE LA TECHNIQUE ANTERIEURE

Les tourbillons de sillage (« wake vortices » en anglais), aussi appelés « tourbillons marginaux » ou « tourbillons de bouts d'aile » (« wingtip vortices » en anglais), sont des turbulences de sillage contrarotatives aux extrémités des ailes d'un aéronef en vol dues à une différence de pression entre l'intrados et l'extrados des ailes. Les tourbillons de sillage peuvent subsister plusieurs minutes après le passage d'un aéronef, et perturber le confort de passagers d'un autre aéronef passant à proximité entretemps. Des distances de sécurité entre aéronefs en vol sont appliquées par le contrôle de trafic aérien ATC (« Air Traffic Control » en anglais) pour prendre en compte les tourbillons de sillage et éviter d'éventuelles difficultés de vol liées à leur existence.

En formation, un aéronef meneur (« leader aircraft » en anglais) est suivi par un ou plusieurs aéronefs suiveurs (« follower aircraft » en anglais), qui peuvent subir des inconforts liés aux tourbillons de sillage de l'aéronef meneur. Toutefois, en contrôlant leur position par rapport aux tourbillons de sillage, les aéronefs suiveurs peuvent bénéficier d'un phénomène de flux d'air ascendant induit par les tourbillons de sillage, réduisant ainsi traînée et consommation de carburant. Par contre, si les aéronefs suiveurs pénètrent l'espace entre les tourbillons de sillage de l'aéronef meneur, les aéronefs suiveurs subissent un phénomène de flux d'air descendant qui est induit par les tourbillons de sillage et qui nuit à leur performance. De même, des turbulences sont subies par un aéronef suiveur si une de ses ailes pénètre un tourbillon de sillage. Ces turbulences entraînent un inconfort notable pour les passagers de l'aéronef suiveur.

Des solutions existent pour permettre à un aéronef suiveur de se positionner, de manière automatique, par rapport à un tourbillon de sillage généré par un aéronef meneur. On peut par exemple se référer à la demande de brevet français FR 3041121 A1. Bien que la solution qui y est divulguée permette à un aéronef suiveur de bénéficier effectivement du phénomène de flux d'air ascendant induit par un tourbillon de sillage d'un aéronef meneur, l'inconfort susmentionné peut être subi par les passagers de l'aéronef suiveur.

Il est connu le document FR 3049076 A1, qui divulgue un procédé de contrôle de la trajectoire d'un aéronef suiveur par rapport à la trajectoire d'un aéronef meneur afin de bénéficier du phénomène de flux d'air ascendant induit par des tourbillons de sillage, en calculant des coefficients de moments latéraux perturbateurs générés par les tourbillons de sillage.

Il est aussi connu le document FR 3079942 A1, qui divulgue un procédé de contrôle de la trajectoire d'un aéronef suiveur par rapport à la trajectoire d'un aéronef meneur afin de bénéficier du phénomène de flux d'air ascendant induit par des tourbillons de sillage, en utilisant une approche par tronçons.

Il est aussi connu le document US 2003/0222795 A1, qui divulgue un système d'évitement de tourbillons de sillage qui utilise des paramètres aériens et atmosphériques facilement disponibles en vol pour modéliser et prédire des tourbillons de sillage en temps réel. Le système prédit l'emplacement et le mouvement du tourbillon de sillage sur la base d'un modèle de tourbillon de sillage nominal, et effectue une analyse d'incertitude sur le modèle de tourbillon de sillage pour déterminer une zone de danger de sillage (zone d'interdiction de survol) à présenter au pilote (par exemple, sous forme d'affichage en trois dimensions).

Il est alors souhaitable de fournir une solution d'aide au vol en formation permettant de pallier l'inconfort susmentionné, tout en bénéficiant du phénomène de flux d'air ascendant induit par le tourbillon de sillage de l'aéronef meneur.

### EXPOSE DE L'INVENTION

Il est proposé un procédé d'aide au vol en formation d'aéronefs, le procédé étant implémenté par un système sous forme de circuiterie électronique embarquée dans un aéronef agissant comme aéronef suiveur, le procédé comportant les étapes suivantes :
- obtention d'informations relatives à un aéronef meneur générant un tourbillon de sillage induisant un flux d'air ascendant dont le système vise à faire bénéficier l'aéronef suiveur ;
- détermination d'un effet du tourbillon de sillage subi par l'aéronef suiveur comme une différence entre mesures, effectuées par des capteurs de l'aéronef suiveur, et une modélisation de l'aéronef suiveur en environnement libre de tourbillon de sillage ;
- à l'aide d'un filtre bayésien récursif, détermination d'une position estimée du tourbillon de sillage à partir des informations relatives à l'aéronef meneur obtenues et d'un modèle de tourbillon de sillage, et détermination d'une incertitude d'estimation sur la position estimée du tourbillon de sillage par comparaison de l'effet du tourbillon de sillage subi par l'aéronef suiveur et d'un effet théorique du tourbillon de sillage sur l'aéronef suiveur d'après le modèle de tourbillon de sillage ;
- détermination d'une fenêtre d'inconfort potentiel autour de la position estimée du tourbillon de sillage, en fonction de l'incertitude d'estimation sur la position estimée du tourbillon de sillage ; et
- définition et application d'une trajectoire d'approche du tourbillon de sillage et maintien de l'aéronef suiveur en dehors de la fenêtre d'inconfort potentiel, en contrôlant un placement de l'aéronef suiveur à une distance prédéfinie de la position estimée du tourbillon de sillage lorsque la fenêtre d'inconfort potentiel a des dimensions qui le permettent et à une marge prédéfinie de la fenêtre d'inconfort potentiel sinon.

Ainsi, l'aéronef suiveur bénéficie du phénomène de flux d'air ascendant induit par le tourbillon de sillage de l'aéronef meneur, sans générer d'inconfort pour les passagers de l'aéronef suiveur.

Dans un mode de réalisation particulier, le filtre de type bayésien récursif est un filtre particulaire.

Dans un mode de réalisation particulier, la détermination de la position estimée du tourbillon de sillage et de la fenêtre d'inconfort potentiel est effectuée de la manière suivante :
- détermination, pour chaque position potentielle parmi un ensemble de positions potentielles déterminé à partir de la position géométrique de tourbillon de sillage déterminée, d'une valeur de probabilité de présence du tourbillon de sillage à ladite position potentielle, la valeur de probabilité en question étant déterminée par comparaison de l'effet du tourbillon de sillage subi par l'aéronef suiveur et d'un effet théorique du tourbillon de sillage sur l'aéronef suiveur d'après le modèle de tourbillon de sillage lorsque le tourbillon de sillage est localisé à ladite position potentielle ;
- former la fenêtre d'inconfort potentiel par regroupement de positions potentielles du tourbillon de sillage ayant une valeur de probabilité supérieure à un premier seuil prédéterminé.

Dans un mode de réalisation particulier, lorsque le système détecte que la fenêtre d'inconfort potentiel a des dimensions qui permettent le placement de l'aéronef suiveur à ladite distance prédéfinie de la position estimée du tourbillon de sillage, le système commande à l'aéronef suiveur d'effectuer des mouvements à facteur de charge inférieur à un deuxième seuil prédéterminé.

Dans un mode de réalisation particulier, les mouvements en question sont préférentiellement des mouvements oscillatoires ou pseudo-oscillatoires verticaux.

Il est aussi proposé un produit programme d'ordinateur comportant des instructions causant une implémentation du procédé tel que présenté ci-dessus dans l'un quelconque de ses modes de réalisation, lorsque les instructions sont exécutées par un processeur. Il est aussi proposé un support de stockage d'informations sur lequel est stocké un tel produit programme d'ordinateur, causant ainsi une implémentation dudit procédé, lorsque les instructions sont lues depuis le support de stockage d'informations et exécutées par un processeur.

Il est aussi proposé un système d'aide au vol en formation d'aéronefs, sous forme de circuiterie électronique embarquée dans un aéronef destiné à agir comme aéronef suiveur dans le vol en formation, la circuiterie électronique étant configurée pour implémenter les étapes suivantes :
- obtention d'informations relatives à un aéronef meneur générant un tourbillon de sillage induisant un flux d'air ascendant dont le système vise à faire bénéficier l'aéronef suiveur ;
- détermination d'un effet du tourbillon de sillage subi par l'aéronef suiveur comme une différence entre mesures, effectuées par des capteurs de l'aéronef suiveur, et une modélisation de l'aéronef suiveur en environnement libre de tourbillon de sillage ;
- à l'aide d'un filtre bayésien récursif, détermination d'une position estimée du tourbillon de sillage à partir des informations relatives à l'aéronef meneur obtenues et d'un modèle de tourbillon de sillage, et détermination d'une incertitude d'estimation sur la position estimée du tourbillon de sillage par comparaison de l'effet du tourbillon de sillage subi par l'aéronef suiveur et d'un effet théorique du tourbillon de sillage sur l'aéronef suiveur d'après le modèle de tourbillon de sillage ;
- détermination d'une fenêtre d'inconfort potentiel autour de la position estimée du tourbillon de sillage, en fonction de l'incertitude d'estimation sur la position estimée du tourbillon de sillage ; et
- définition et application d'une trajectoire d'approche du tourbillon de sillage et maintien de l'aéronef suiveur en dehors de la fenêtre d'inconfort potentiel, en contrôlant un placement de l'aéronef suiveur à une distance prédéfinie de la position estimée du tourbillon de sillage lorsque la fenêtre d'inconfort potentiel a des dimensions qui le permettent et à une marge prédéfinie de la fenêtre d'inconfort potentiel sinon.

Il est aussi proposé un aéronef agissant comme aéronef suiveur dans un vol en formation, qui comporte un système d'aide au vol en formation tel que présenté ci-dessus.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement, en vue de dessus, un aéronef équipé d'un système d'aide au vol en formation ;
[Fig. 2] illustre schématiquement un exemple d'architecture matérielle sur laquelle peut reposer le système d'aide au vol en formation ;
[Fig. 3] illustre schématiquement, en vue de face, un positionnement d'aéronef suiveur par rapport à un aéronef meneur lors d'un vol en formation ;
[Fig. 4] illustre schématiquement, en vue de dessus, le positionnement d'aéronef suiveur par rapport à l'aéronef meneur lors du vol en formation ;
[Fig. 5] illustre schématiquement une architecture modulaire du système d'aide au vol en formation ;
[Fig. 6] illustre schématiquement un algorithme de contrôle de positionnement de l'aéronef suiveur par rapport à l'aéronef meneur lors du vol en formation ;
[Fig. 7] illustre schématiquement un algorithme de détermination d'une probabilité de présence d'un tourbillon de sillage à une position donnée, dans un mode de réalisation particulier ; et
[Fig. 8] illustre schématiquement un exemple de fenêtre d'inconfort potentiel déterminé pour l'aéronef suiveur, dans un mode de réalisation particulier.

### EXPOSE DETAILLE DE MODES DE REALISATION

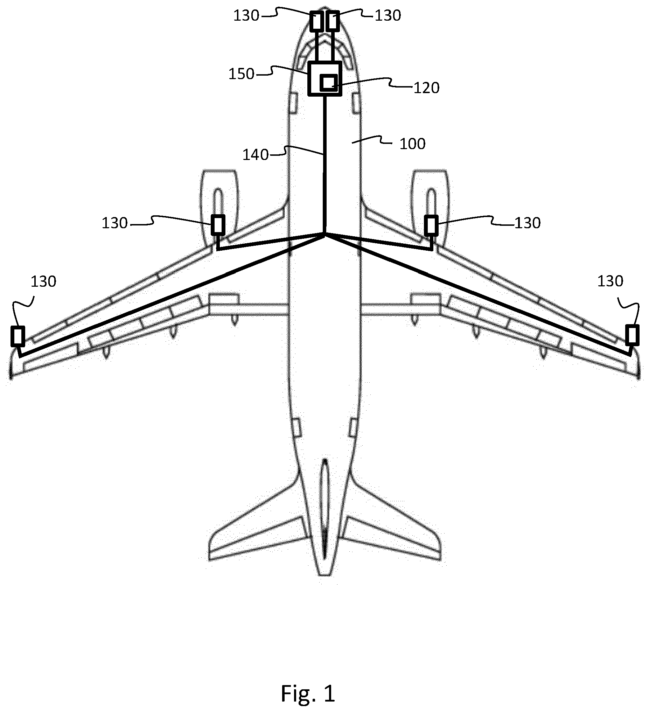

La Fig. 1 illustre schématiquement, en vue de dessus, un aéronef 100 équipé d'un système 120 d'aide au vol en formation, plus particulièrement lorsque l'aéronef 100 agit comme suiveur dans un vol en formation, afin de bénéficier d'un phénomène de flux d'air ascendant induit par un tourbillon de sillage d'un aéronef meneur.

Dans un mode de réalisation particulier, le système 120 est intégré à l'avionique 150 de l'aéronef 100.

L'aéronef 100 est équipé de nombreux capteurs 130, comme c'est usuellement le cas en aéronautique : capteurs de température, capteurs de vibrations (par exemple sous forme d'accéléromètres), capteurs de pression, capteurs inertiels... Ces capteurs 130 fournissent des informations, complétées par des informations communiquées par radiofréquence (e.g., communications air-sol ou satellite), permettent à l'avionique 150 de déterminer des paramètres relatifs à l'aéronef 100 en vol (vitesse, attitude, altitude...) et à son environnement (pression atmosphérique, vitesse air...). Chaque capteur 130 est relié à l'avionique 150 par un câblage électrique, ou un système de communication (bus de communication, réseau de communication...) 140, comme montré de manière purement illustrative sur la Fig. 1.

Comme divulgué par la suite, le système 120 s'appuie sur des informations fournies par l'avionique 150, notamment grâce aux capteurs 130, ainsi que sur des informations fournies par l'aéronef meneur et de modèles préétablis, pour aider à positionner l'aéronef 100, agissant comme aéronef suiveur, de sorte à bénéficier du phénomène de flux d'air ascendant sans provoquer d'inconfort pour les passagers de l'aéronef 100.

Préférentiellement, le système 120 est débrayable et est activé pendant des phases de vol en formation où l'aéronef 100 est suiveur. Par exemple, le système 120 est activé / désactivé sur commande d'un pilote de l'aéronef 100.

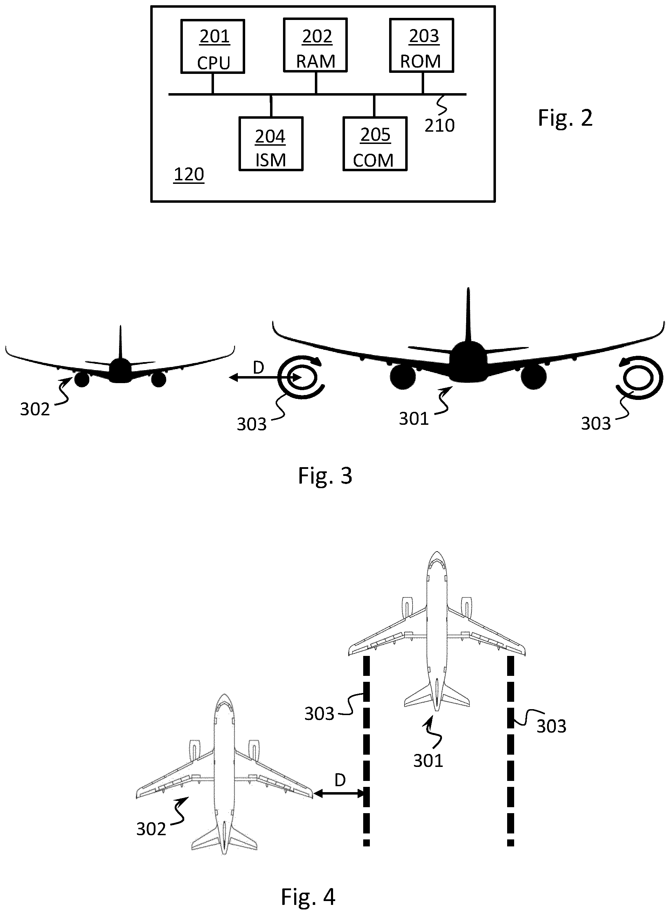

La Fig. 2 illustre schématiquement un exemple d'architecture matérielle sur laquelle peut reposer le système 120.

Le système 120 comprend alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203, par exemple une mémoire Flash ; un dispositif de stockage de données, tel qu'un disque dur HDD (« Hard Disk Drive » en anglais), ou un lecteur de support de stockage d'informations ISM (« Information Storage Medium » en anglais) 204, tel qu'un lecteur de cartes SD (« Secure Digital » en anglais) ; au moins une interface de communication 205 permettant au système 120 d'interagir plus particulièrement avec l'avionique 150, ainsi qu'avec l'avionique de l'aéronef meneur ou avec un équipement au sol servant de relais avec l'avionique de l'aéronef meneur.

Le processeur 201 est capable d'exécuter des instructions chargées dans la RAM 202 à partir de la ROM 203, d'une mémoire externe (non représentée), d'un support de stockage, tel qu'une carte SD, ou d'un réseau de communication (non représenté). Lorsque le système 120 est mis sous tension, le processeur 201 est capable de lire de la RAM 202 des instructions et de les exécuter. Ces instructions forment un programme d'ordinateur causant l'implémentation, par le processeur 201, de l'architecture modulaire, des comportements, étapes et algorithmes décrits ici.

Tout ou partie de l'architecture modulaire, des comportements, étapes et algorithmes décrits ici peut ainsi être implémenté sous forme logicielle par exécution d'un ensemble d'instructions par une machine programmable, telle qu'un DSP (« Digital Signal Processor » en anglais) ou un microprocesseur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). Le système 120 comporte donc de la circuiterie électronique agencée et configurée pour implémenter l'architecture modulaire, ainsi que les comportements, étapes et algorithmes décrits ici.

La Fig. 3 illustre schématiquement, en vue de face, un positionnement d'aéronef suiveur 302 par rapport à un aéronef meneur 301 lors d'un vol en formation. Les aéronefs 301 et 302 sont en vol de croisière. Le déplacement de l'aéronef meneur 301 génère des tourbillons de sillage 303. Si l'aéronef suiveur 302 se maintient à une distance D comprise entre un seuil minimum Dmin (par exemple, Dmin = 20 mètres) et un seuil maximum Dmax (par exemple, Dmax = 30 mètres) des tourbillons marginaux à l'extérieur de la trajectoire de l'aéronef meneur 301, l'aéronef suiveur 302 bénéficie du phénomène de flux d'air ascendant susmentionné, réduisant ainsi traînée et consommation de carburant pour l'aéronef suiveur 302. Entre le seuil minimum Dmin et le seuil maximum Dmax, placer l'aéronef suiveur 302 à une distance Dconf (par exemple, Dconf = 25 mètres, plus ou moins une marge prédéfinie) permet de bénéficier significativement du phénomène de flux d'air ascendant, tout en assurant le confort des passagers de l'aéronef suiveur 302.

En complément de la Fig. 3, la Fig. 4 illustre schématiquement le positionnement de l'aéronef suiveur 302 par rapport à l'aéronef meneur 301 en vue de dessus.

Les tourbillons de sillage 303 y sont schématiquement représentés de manière simplifiée. En effet, à partir des ailes, les tourbillons de sillage 303 tendent d'abord à se rapprocher l'un de l'autre, puis à maintenir une distance substantiellement constante entre eux, tout en perdant de l'altitude par rapport à celle à laquelle ils ont été générés. De plus, le vent influe sur la trajectoire et la géométrie des tourbillons de sillage 303 au fil du temps.

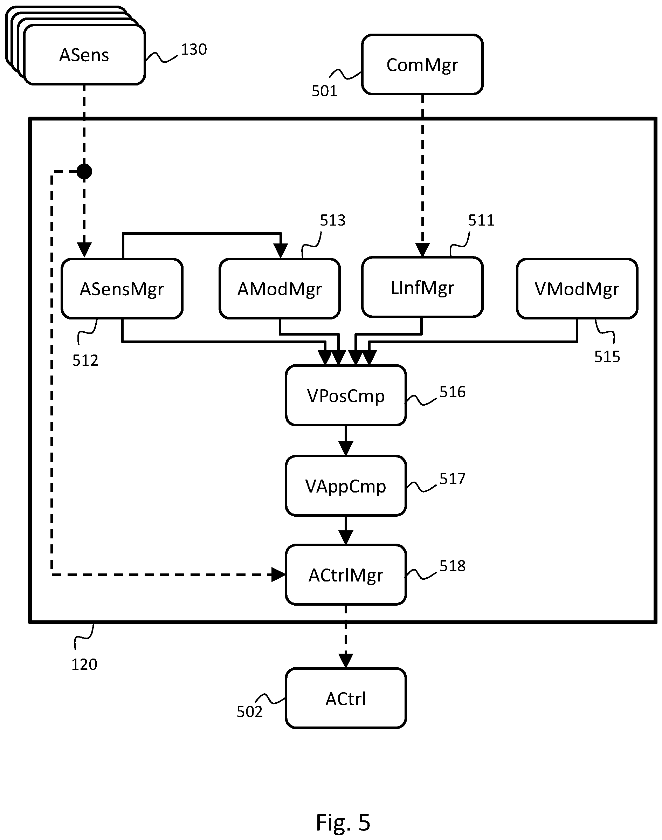

La Fig. 5 illustre schématiquement une architecture modulaire du système 120.

Le système 120 comporte un module gestionnaire de capteurs ASensMgr 512, configuré pour collecter en temps-réel des informations relatives aux mesures effectuées par les capteurs 130 (libellés ASens sur la Fig. 5), incluant des informations de conditions atmosphériques courantes (par exemple, vitesse et direction du vent), ainsi que des informations d'effets subis par l'aéronef suiveur 302 (par exemple, accélération de roulis).

Le système 120 comporte aussi un module gestionnaire d'informations relatives à l'aéronef meneur 301 (envergure, masse, position géographique, vitesse, altitude, attitude...) LInfMgr 511. Le module LInfMgr 511 reçoit ces informations, et leurs éventuelles mises à jour en temps réel, en provenance d'un système gestionnaire de communications ComMgr 501 de l'avionique 150 en communication avec un système embarqué de l'aéronef meneur 301, éventuellement via un relais intermédiaire (e.g., système de communication au sol).

Le système 120 comporte en outre un module gestionnaire de modèle d'aéronef AModMgr 513, configuré pour déterminer des effets sur l'aéronef suiveur 302 du tourbillon de sillage 303. Le module gestionnaire de modèle d'aéronef AModMgr 513 utilise des mesures fournies par les capteurs ASens130 (par exemple, accélération de roulis) pour déterminer des effets subis par l'aéronef suiveur 302. Le module AModMgr 513 utilise aussi un modèle de l'aéronef suiveur 302, modélisant des effets subis par l'aéronef suiveur 302 en vol hors sillage d'un autre aéronef (par exemple, propriétés aérodynamiques en fonction de la masse de l'aéronef). Par exemple, pour une certaine déflection d'aileron, une certaine accélération de roulis est attendue en environnement libre de tourbillon de sillage généré par un autre aéronef. Ainsi, le module AModMgr 513 est configuré pour déterminer les effets sur l'aéronef suiveur 302 du tourbillon de sillage 303 en soustrayant aux effets mesurés par les capteurs ASens 130 ceux contenus dans ledit modèle de l'aéronef suiveur 302.

Le système 120 comporte en outre un module de calcul de position de tourbillon de sillage VPosCmp 516. Le module VPosCmp 516 est configuré pour estimer une position du tourbillon de sillage 303 avec une incertitude d'estimation, qui peut elle-même être déterminée, et est configuré pour déterminer une fenêtre spatiale, appelée fenêtre d'inconfort potentiel, définie par l'incertitude d'estimation autour de la position estimée du tourbillon de sillage 303. Dans un mode de réalisation particulier, la fenêtre d'inconfort potentiel définit un espace dans lequel le tourbillon de sillage 303 est supposé être présent avec une probabilité supérieure ou égale à un seuil prédéterminé TH_vx.

Le module VPosCmp 516 calcule pour ce faire une géométrie géoréférencée du tourbillon de sillage 303.

Le module VPosCmp 516 est également configuré pour calculer la géométrie géoréférencée du tourbillon de sillage 303 duquel l'aéronef suiveur 302 peut bénéficier du phénomène de flux d'air ascendant, à partir d'informations relatives à l'aéronef meneur 301 (telles que l'envergure, la masse, la position géographique, la vitesse, l'altitude, l'attitude...) et d'informations relatives aux conditions atmosphériques rencontrées (par exemple, vitesse et direction du vent) par l'aéronef meneur 301 et l'aéronef suiveur 302. Le calcul de la géométrie géoréférencée du tourbillon de sillage 303 est bien connu de l'homme du métier et passe par plusieurs étapes : constructions de positions géoréférencées successives par lesquelles est passé l'aéronef meneur 301, calcul d'une dérive liée au vent, et prise en compte de la physique du tourbillon de sillage avec notamment une vitesse de descente. Le module VPosCmp 516 réalise ainsi une modélisation géoréférencée en trois dimensions, en temps réel, de la géométrie du tourbillon de sillage 303. Ensuite, par projection de la position de l'aéronef suiveur 302 sur des positions calculées du centre du tourbillon de sillage, une distance de l'aéronef suiveur 302 par rapport au tourbillon de sillage peut être calculée. Des détails d'implémentation et de calcul sont par exemple divulgués dans la demande de brevet français FR 3041121 A1 déjà mentionnée.

Pour déterminer la géométrie géoréférencée du tourbillon de sillage 303, le module VPosCmp 516 utilise des données (vitesse de descente...) fournies par un modèle de tourbillon de sillage. Le système 120 comporte alors un module gestionnaire de modèle de tourbillon de sillage VModMgr 515 fournissant au module VPosCmp 516 lesdites données de modèle de tourbillon de sillage.

Le module VPosCmp 516 est ainsi configuré pour déterminer, à l'aide d'un filtre bayésien récursif, une position estimée du tourbillon de sillage à partir des informations relatives à l'aéronef meneur obtenues et d'un modèle de tourbillon de sillage, et pour déterminer une incertitude d'estimation sur la position estimée du tourbillon de sillage par comparaison de l'effet du tourbillon de sillage 303 subi par l'aéronef suiveur 302 et d'un effet théorique du tourbillon de sillage 303 sur l'aéronef suiveur 302 d'après le modèle de tourbillon de sillage. En effet, du fait notamment d'imprécisions de mesures et/ou d'imprécisions de modèles utilisés, il existe une incertitude concernant la géométrie et le géoréférencement effectifs du tourbillon de sillage 303 calculés par le module VPosCmp 516 grâce au filtre de type bayésien récursif.

Le module VPosCmp 516 est ainsi configuré pour déterminer la fenêtre d'inconfort potentiel associée à la position estimée du tourbillon de sillage, en fonction de l'incertitude d'estimation sur la position estimée du tourbillon de sillage. Dans un exemple de réalisation, le module VPosCmp 516 détermine la fenêtre d'inconfort potentiel en appliquant une distance dépendante de l'incertitude d'estimation (par exemple, proportionnelle à l'incertitude d'estimation ou linéairement dépendante de l'incertitude d'estimation), autour de la position estimée du tourbillon de sillage 303. Ainsi, plus l'incertitude d'estimation est grande, plus les dimensions de la fenêtre d'inconfort potentiel sont importantes. La précision de l'estimation peut alors être améliorée en gagnant en observabilité, afin de permettre de réduire les dimensions de la fenêtre d'inconfort potentiel.

Dans un autre exemple de réalisation, grâce à un filtre particulaire (« Particle Filter » en anglais), le module VPosCmp 516 détermine l'effet théorique du tourbillon de sillage 303 sur l'aéronef suiveur 302 à différentes positions potentielles dudit tourbillon de sillage 303 au vu de la géométrie géoréférencée précédemment calculée, et compare, pour chaque position parmi lesdites différentes positions potentielles, cet effet théorique avec l'effet sur l'aéronef 302 dudit tourbillon de sillage 303 déterminé par le module AModMgr 513 (par exemple, grâce à des données de moment de tangage). Le module VPosCmp 516 détermine alors une valeur de probabilité de présence du tourbillon de sillage 303 à ladite position. Ainsi, si l'effet théorique est trop faible par rapport à l'effet effectivement subi par l'aéronef suiveur 302 d'après les mesures des capteurs ASens 130, c'est-à-dire que la valeur de probabilité est inférieure au seuil prédéterminé TH_vx, il est peu probable que le tourbillon de sillage 303 se trouve à cette position. La fenêtre spatiale dans laquelle le tourbillon de sillage 303 est supposé être présent avec une probabilité supérieure ou égale au seuil prédéterminé TH_vx est un espace d'inconfort potentiel pour les passagers de l'aéronef suiveur 302, à cause de turbulences qui sont potentiellement subies par l'aéronef suiveur 302 et qui sont dues audit tourbillon de sillage 303. Cette fenêtre spatiale constitue alors la fenêtre d'inconfort potentiel susmentionnée.

Dans un mode de réalisation particulier, le module VPosCmp 516 détermine une valeur de probabilité de présence du tourbillon de sillage 303 à chaque dite position pour différentes caractéristiques de tourbillon de sillage (diamètre de tourbillon, profils de vélocité, profils de circulation...).

En variante du filtre particulaire présenté ci-dessus, le module VPosCmp 516 peut inclure un autre type de filtre bayésien récursif, tel qu'un filtre de Kalman. D'autres approches pour estimer la position du tourbillon de sillage 303 et l'incertitude d'estimation associée, comme un calcul de gradients locaux, peuvent être dérivées des connaissances générales de l'homme du métier.

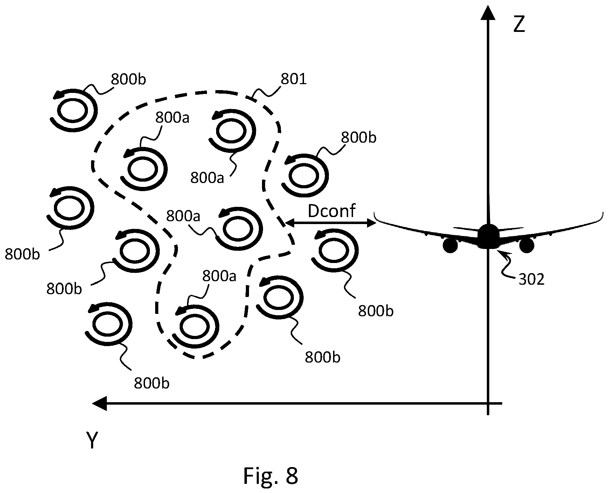

Le module VPosCmp 516 réalise des calculs de distance par rapport au tourbillon de sillage 303 dans un espace en deux dimensions, dans un plan [Y,Z] dans un repère géodésique [X,Y,Z], comme représenté sur la Fig. 8. L'espace en trois dimensions [X,Y,Z] dans lequel est calculée la géométrie géoréférencée du tourbillon de sillage 303 permet d'assurer un suivi de trajectoire, et la coupe transversale dans le plan [Y,Z] est utilisée pour déterminer la fenêtre d'inconfort potentiel, c'est-à-dire la position estimée du tourbillon de sillage 303 en tenant compte des incertitudes de calcul.

Dans un mode de réalisation particulier, le module VPosCmp 516 est composé de deux sous-modules, pour des questions de capacités de calcul : un premier sous-module avec un estimateur grossier de la position du tourbillon de sillage 303 (avec une première précision) et un deuxième sous-module avec un estimateur de raffinement (avec une deuxième précision meilleure que la première précision). Le premier sous-module peut alors effectuer un calcul géométrique qui est relativement grossier ne prenant pas en compte toutes les dynamiques de vent et du tourbillon de sillage. Le second sous-module utilise alors un modèle plus fin, qui s'initialise sur les résultats du premier sous-module, et qui corrige des incertitudes de calculs du premier sous-module au moyen d'un estimateur plus précis (filtre bayésien récursif...).

Le système 120 comporte en outre un module de gestion de trajectoire VAppCmp 517, pour placer l'aéronef suiveur 302 à une distance D adéquate de ladite fenêtre d'inconfort potentiel ou de la position estimée du tourbillon de sillage 303 selon le cas. Le module VAppCmp 517 gère la trajectoire de l'aéronef suiveur 302 de sorte que l'aéronef suiveur 302 reste en dehors de la fenêtre d'inconfort potentiel. Plus précisément, le module VAppCmp 517 contrôle le placement de l'aéronef suiveur 302 à une distance prédéfinie de la position estimée du tourbillon de sillage 303 (à savoir à la distance Dconf) lorsque la fenêtre d'inconfort potentiel a des dimensions qui le permettent et à une marge prédéfinie de la fenêtre d'inconfort potentiel sinon.

Le module VAppCmp 517 est configuré pour déterminer une trajectoire d'approche dudit tourbillon de sillage 303 et est en outre configuré pour effectuer un suivi du tourbillon de sillage 303 et aligner la trajectoire de l'aéronef suiveur 302 en conséquence de manière à maintenir l'aéronef suiveur 302 en dehors de la fenêtre d'inconfort potentiel tout en cherchant à bénéficier du flux d'air ascendant induit par le tourbillon de sillage 303. Typiquement, le module VAppCmp 517 calcule des positions cibles successives formant la trajectoire à suivre par l'aéronef suiveur 302 avec les contraintes suivantes :
- ne pas pénétrer dans la fenêtre d'inconfort potentiel (dont les dimensions peuvent évoluer en fonction des nouvelles mesures collectées en temps-réel), tout en cherchant à bénéficier du flux d'air ascendant induit par le tourbillon de sillage ;
- récolter de nouvelles mesures pour permettre de corriger la distribution de probabilités et ainsi d'améliorer les performances d'estimation et de réduire la taille de la fenêtre d'inconfort potentiel ; et
- définir des trajectoires confortables, voire imperceptibles, pour les passagers de l'aéronef suiveur 302.

Dans un mode de réalisation particulier, le module VAppCmp 517 est configuré pour, lorsqu'il détecte que la fenêtre d'inconfort potentiel a des dimensions qui permettent le placement de l'aéronef suiveur à la distance Dconf par rapport à la position estimée du tourbillon de sillage (tout en restant donc en dehors de la fenêtre d'inconfort potentiel), commander à l'aéronef suiveur 302 d'effectuer des mouvements à facteur de charge inférieur à un seuil prédéterminé TH_lf. Ainsi, le système 120 gagne en observabilité sur le tourbillon de sillage 303 de manière confortable, voire imperceptible, pour les passagers de l'aéronef suiveur 302.

Le système 120 comporte en outre un module gestionnaire de contrôle de commandes d'aéronef ACtrlMgr 518, configuré pour convertir chaque trajectoire déterminée par le module VAppCmp 517 en commandes de manoeuvre de l'aéronef suiveur 302. Les commandes de manoeuvre sont alors transmises à un système de gestion de commandes de vol ACtrl 502 (servocommandes) de l'avionique 150, par exemple intégré à un système de pilotage automatique.

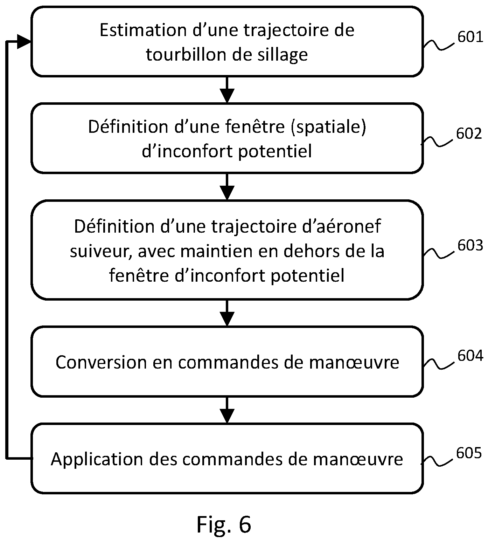

La Fig. 6 illustre schématiquement un algorithme de contrôle de positionnement de l'aéronef suiveur 302 par rapport à l'aéronef meneur 301 lors du vol en formation.

Dans une étape 601, le système 120 effectue une estimation de géométrie du tourbillon de sillage 303 pour lequel l'aéronef suiveur 302 cherche à bénéficier du phénomène de flux ascendant, comme déjà décrit en relation avec le module VPosCmp 516.

Dans une étape 602, le système 120 détermine une fenêtre d'inconfort potentiel pour les passagers de l'aéronef suiveur 302, comme déjà décrit aussi en relation avec le module VPosCmp 516.

Dans une étape 603, le système 120 définit une trajectoire d'approche vers le tourbillon de sillage 303, qui est convertie en commandes de manoeuvre d'aéronef dans une étape 604 suivante. Cette trajectoire d'approche assure de ne pas pénétrer dans la fenêtre d'inconfort potentiel, tout en gagnant en observabilité afin de réduire les dimensions de la fenêtre d'inconfort potentiel (optimisation des performances du module VPosCmp 516).

Une fois la trajectoire d'approche effectuée, le système entre dans une phase de suivi (« tracking » en anglais) dans laquelle le système 120, et plus particulièrement le module VAppCmp 517, définit les positions successives de la trajectoire de l'aéronef suiveur 302 en respectant les conditions suivantes : lorsque les dimensions de la fenêtre d'inconfort potentiel sont grandes au point que l'aéronef suiveur 302 ne peut pas se placer à la distance Dconf, le système 120 définit la trajectoire de l'aéronef suiveur 302 pour rester à une distance égale à une marge prédéfinie de la fenêtre d'inconfort potentiel ; et lorsque les dimensions de la fenêtre d'inconfort potentiel sont suffisamment petites pour que l'aéronef suiveur 302 puisse se placer à la distance Dconf, le système 120 maintient l'aéronef suiveur 302 à la distance Dconf.

Au fil du vol, le système 120 continue d'acquérir des mesures effectuées par les capteurs 130. Grâce à ces mesures, le système 120 met à jour la fenêtre d'inconfort potentiel et ajuste ainsi la trajectoire en respectant les conditions ci-dessus.

La collecte en temps réel de nouvelles mesures effectuées par les capteurs 130 dans l'exécution de la trajectoire d'approche vers le tourbillon de sillage 303, et dans la phase de suivi, permet de mettre à jour en temps réel la position et les dimensions de la fenêtre d'inconfort potentiel. Le module VAppCmp 516 exploite la fenêtre d'inconfort potentiel pour permettre la collecte de données au plus proche du tourbillon de sillage 303, là où elles sont les plus pertinentes pour réduire l'incertitude d'estimation, sans que les passagers de l'aéronef suiveur 302 n'aient à subir d'inconfort.

Dans un mode de réalisation particulier, le système 120 commande à l'aéronef suiveur 302 des mouvements à faible facteur de charge (« load factor » en anglais), c'est-à-dire à facteur de charge inférieur au seuil prédéterminé TH_lf, qui est un seuil au-delà duquel les mouvements de l'aéronef sont considérés inconfortables, ou perceptibles, pour les passagers. Les mouvements en question s'inscrivent dans le plan [Y,Z] (mouvements verticaux et/ou latéraux). Les mouvements en question sont préférentiellement des mouvements oscillatoires ou pseudo-oscillatoires verticaux. Ces mouvements permettent de déplacer l'aéronef suiveur 302 relativement par rapport au tourbillon de sillage 303 et d'acquérir de nouvelles mesures en provenance des capteurs 130 (gain en « observabilité »), afin d'affiner la définition de la fenêtre d'inconfort potentiel.

Dans l'étape 604, le système 120 convertit en commandes de manoeuvre d'aéronef la trajectoire définie à l'étape 603 de sorte à amener l'aéronef suiveur 302 à suivre la trajectoire définie.

Dans une étape 605, le système 120 fait appliquer à l'aéronef suiveur 302 les commandes de manoeuvre obtenues à l'étape 604. L'algorithme reboucle ensuite à l'étape 601, de sorte à prendre en compte les évolutions de la position et de la géométrie du tourbillon de sillage 303, les éventuelles évolutions des conditions atmosphériques, et faire évoluer la fenêtre d'inconfort potentiel en conséquence.

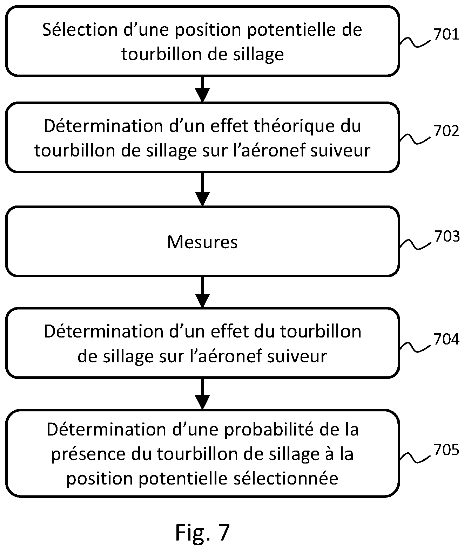

La Fig. 7 illustre schématiquement un algorithme de détermination d'une probabilité de présence d'un tourbillon de sillage à une position donnée, permettant ainsi la détermination de la fenêtre d'inconfort potentiel pour l'aéronef suiveur 302, dans un mode de réalisation particulier adapté à l'utilisation d'un filtre particulaire. Pour ce faire, l'algorithme calcule une distribution de probabilités de localisation spatiale du tourbillon de sillage 303. Pour calculer cette distribution de probabilités, l'algorithme calcule par exemple des vraisemblances.

Dans une étape 701, le système 120 sélectionne une position potentielle du tourbillon de sillage 303 parmi un ensemble de positions potentielles. L'ensemble de positions potentielles est défini par analyse d'incertitude, au vu de la précision d'estimation (e.g., précision du filtre particulaire), ou de manière empirique lors de phases de tests en vol par comparaison de données modélisées et de données de mesures.

Dans un mode de réalisation particulier, le système 120 intègre un filtre particulaire et chaque particule représente une position potentielle du tourbillon de sillage 303 (ou de son centre) dans le repère [Y,Z].

Dans une étape 702, le système 120 détermine un effet théorique du tourbillon de sillage 303 sur l'aéronef suiveur 302, en considérant que le tourbillon de sillage 303 est localisé à la position sélectionnée à l'étape 701. Le système 120 utilise pour ce faire le modèle susmentionné de tourbillon de sillage (fourni par le module VModMgr 515).

Dans une étape 703, le système 120 collecte des mesures effectuées par les capteurs 130, et dans une étape 704, détermine un effet réel sur l'aéronef 302 du tourbillon de sillage 303 grâce aux mesures des capteurs 130 (déterminé par le module AModMgr 513). Dans les mesures des capteurs 130, l'effet du tourbillon de sillage 303 est majoritaire par rapport à d'autres perturbations qui seraient captées par les capteurs 130. L'effet sur ces mesures de ces autres perturbations est donc négligeable.

Dans une étape 705, le système 120 compare l'effet théorique du tourbillon de sillage 303 sur l'aéronef suiveur 302 tel que déterminé à l'étape 702 avec l'effet du tourbillon de sillage 303 sur l'aéronef suiveur 302 tel que déterminé à l'étape 704. La différence entre l'effet théorique du tourbillon de sillage 303 sur l'aéronef suiveur 302 tel que déterminé à l'étape 702 et l'effet du tourbillon de sillage 303 subi par l'aéronef suiveur 302 tel que déterminé à l'étape 704 fournit une valeur de probabilité de la présence du tourbillon de sillage 303 à la position sélectionnée à l'étape 701.

Le système 120 procède ainsi pour chaque position potentielle dudit ensemble de positions potentielles. Une valeur de probabilité (de présence du tourbillon de sillage) est ainsi associée à chaque position potentielle dudit ensemble de positions potentielles. Comme déjà indiqué, la valeur de probabilité peut être calculée pour différentes valeurs de paramètres de tourbillon de sillage (diamètre...). Le système 120 répartit alors les positions potentielles en deux catégories : celles dont la probabilité associée est supérieure ou égale au seuil prédéterminé TH_vx, et celles dont la probabilité associée est inférieure au seuil prédéterminé TH_vx. Un regroupement des positions potentielles dont la probabilité associée est supérieure ou égale au seuil prédéterminé TH_vx forme la fenêtre d'inconfort potentiel susmentionné. La situation est schématiquement illustrée sur la Fig. 8, où des positions potentielles de tourbillon de sillage 800a ont une probabilité associée supérieure ou égale au seuil prédéterminé TH_vx, et sont donc incluses dans la fenêtre d'inconfort potentiel 801, et où des positions potentielles de tourbillon de sillage 800b ont une probabilité associée inférieure au seuil prédéterminé TH_vx, et sont donc exclues de la fenêtre d'inconfort potentiel 801.

## Revendications

1. Procédé d'aide au vol en formation d'aéronefs, le procédé étant implémenté par un système (120) sous forme de circuiterie électronique embarquée dans un aéronef (100) agissant comme aéronef suiveur (302), le procédé comportant les étapes suivantes :
- obtention d'informations relatives à un aéronef meneur (301) générant un tourbillon de sillage induisant un flux d'air ascendant dont le système (120) vise à faire bénéficier l'aéronef suiveur (302) ;
- détermination (704) d'un effet du tourbillon de sillage subi par l'aéronef suiveur (302) comme une différence entre mesures, effectuées par des capteurs (130) de l'aéronef suiveur (302), et une modélisation de l'aéronef suiveur en environnement libre de tourbillon de sillage ;
- à l'aide d'un filtre bayésien récursif, détermination d'une position estimée du tourbillon de sillage à partir des informations relatives à l'aéronef meneur (301) obtenues et d'un modèle de tourbillon de sillage, et détermination d'une incertitude d'estimation sur la position estimée du tourbillon de sillage par comparaison de l'effet du tourbillon de sillage subi par l'aéronef suiveur (302) et d'un effet théorique du tourbillon de sillage sur l'aéronef suiveur (302) d'après le modèle de tourbillon de sillage;
- détermination (602) d'une fenêtre d'inconfort potentiel autour de la position estimée du tourbillon de sillage ; et
- définition (603) et application (605) d'une trajectoire d'approche du tourbillon de sillage ;
**caractérisé en ce que** la fenêtre d'inconfort potentiel autour de la position estimée du tourbillon de sillage est déterminée en fonction de l'incertitude d'estimation sur la position estimée du tourbillon de sillage et le procédé comporte en outre l'étape suivante :
- maintien de l'aéronef suiveur (302) en dehors de la fenêtre d'inconfort potentiel, en contrôlant un placement de l'aéronef suiveur (302) à une distance prédéfinie de la position estimée du tourbillon de sillage lorsque la fenêtre d'inconfort potentiel a des dimensions qui le permettent, et à une marge prédéfinie de la fenêtre d'inconfort potentiel sinon.

2. Procédé selon la revendication 1, dans lequel le filtre de type bayésien récursif est un filtre particulaire.

3. Procédé selon la revendication 2, dans lequel la détermination de la position estimée du tourbillon de sillage et de la fenêtre d'inconfort potentiel est effectuée de la manière suivante :
- détermination (705), pour chaque position potentielle parmi un ensemble de positions potentielles déterminé à partir de la position géométrique de tourbillon de sillage déterminée, d'une valeur de probabilité de présence du tourbillon de sillage à ladite position potentielle, la valeur de probabilité en question étant déterminée par comparaison de l'effet du tourbillon de sillage subi par l'aéronef suiveur (302) et d'un effet théorique du tourbillon de sillage sur l'aéronef suiveur (302) d'après le modèle de tourbillon de sillage lorsque le tourbillon de sillage est localisé à ladite position potentielle ;
- former la fenêtre d'inconfort potentiel par regroupement (801) de positions potentielles du tourbillon de sillage ayant une valeur de probabilité supérieure à un premier seuil prédéterminé.

4. Procédé selon l'une quelconque des revendications 1 à 3, dans lequel, lorsque le système (120) détecte que la fenêtre d'inconfort potentiel a des dimensions qui permettent le placement de l'aéronef suiveur (302) à ladite distance prédéfinie de la position estimée du tourbillon de sillage, le système (120) commande à l'aéronef suiveur (302) d'effectuer des mouvements à facteur de charge inférieur à un deuxième seuil prédéterminé.

5. Procédé selon la revendication 4, dans lequel les mouvements en question sont préférentiellement des mouvements oscillatoires ou pseudo-oscillatoires verticaux.

6. Produit programme d'ordinateur comportant des instructions causant une implémentation du procédé selon l'une quelconque des revendications 1 à 5, lorsque les instructions sont exécutées par un processeur.

7. Support de stockage d'informations stockant des instructions causant une implémentation du procédé selon l'une quelconque des revendications 1 à 5, lorsque les instructions sont lues depuis le support de stockage d'informations et exécutées par un processeur.

8. Système (120) d'aide au vol en formation d'aéronefs, sous forme de circuiterie électronique embarquée dans un aéronef (100) destiné à agir comme aéronef suiveur (302) dans le vol en formation, la circuiterie électronique étant configurée pour implémenter :
- un module d'obtention d'informations relatives à un aéronef meneur (301) générant un tourbillon de sillage induisant un flux d'air ascendant dont le système vise à faire bénéficier l'aéronef suiveur (302) ;
- un module de détermination d'un effet du tourbillon de sillage subi par l'aéronef suiveur (302) comme une différence entre mesures, effectuées par des capteurs (130) de l'aéronef suiveur (302), et une modélisation de l'aéronef suiveur en environnement libre de tourbillon de sillage ;
- à l'aide d'un filtre bayésien récursif, un module de détermination d'une position estimée du tourbillon de sillage à partir des informations relatives à l'aéronef meneur (301) obtenues et d'un modèle de tourbillon de sillage, et de détermination d'une incertitude d'estimation sur la position estimée du tourbillon de sillage par comparaison de l'effet du tourbillon de sillage subi par l'aéronef suiveur (302) et d'un effet théorique du tourbillon de sillage sur l'aéronef suiveur (302) d'après le modèle de tourbillon de sillage ;
- un module de détermination d'une fenêtre d'inconfort potentiel autour de la position estimée du tourbillon de sillage ; et
- des modules de définition et d'application d'une trajectoire d'approche du tourbillon de sillage ;
**caractérisé en ce que** le module de détermination de la fenêtre d'inconfort potentiel autour de la position estimée du tourbillon de sillage est tel que la fenêtre d'inconfort potentiel autour de la position estimée du tourbillon de sillage est déterminée en fonction de l'incertitude d'estimation sur la position estimée du tourbillon de sillage, et la circuiterie électronique est en outre configurée pour implémenter :
- un module de maintien de l'aéronef suiveur (302) en dehors de la fenêtre d'inconfort potentiel, en contrôlant un placement de l'aéronef suiveur (302) à une distance prédéfinie de la position estimée du tourbillon de sillage lorsque la fenêtre d'inconfort potentiel a des dimensions qui le permettent et à une marge prédéfinie de la fenêtre d'inconfort potentiel sinon.

9. Aéronef (100) agissant comme aéronef suiveur (302) dans un vol en formation, qui comporte un système d'aide au vol en formation selon la revendication 8.

## Patentansprüche

1. Verfahren zur Unterstützung beim Formationsflug von Flugzeugen, wobei das Verfahren von einem System (120) in Form von elektronischen Schaltkreisen implementiert wird, die in ein Flugzeug (100) integriert sind, das als Folgeflugzeug (302) agiert, wobei das Verfahren die folgenden Schritte umfasst:
- Erhalten von Informationen bezüglich eines Führungsflugzeugs (301), das eine Wirbelschleppe erzeugt, die einen aufsteigenden Luftstrom bewirkt, von dem das System (120) das Folgeflugzeug (302) profitieren lassen soll;
- Bestimmen (704) eines Wirbelschleppeneffekts, dem das Folgeflugzeug (302) ausgesetzt ist, als Differenz zwischen Messungen, die von Sensoren (130) des Folgeflugzeugs (302) durchgeführt werden, und einer Modellierung des Folgeflugzeugs in einem wirbelschleppenfreien Umfeld;
- mithilfe eines rekursiven Bayes-Filters, Bestimmen einer geschätzten Position der Wirbelschleppe anhand der erhaltenen Informationen bezüglich des Führungsflugzeugs (301) und eines Wirbelschleppenmodells und Bestimmen einer Schätzungsunsicherheit der geschätzten Position der Wirbelschleppe durch Vergleich des Wirbelschleppeneffekts, dem das Folgeflugzeug (302) ausgesetzt ist, und eines theoretischen Wirbelschleppeneffekts, der auf das Folgeflugzeug (302) gemäß dem Wirbelschleppenmodell wirkt;
- Bestimmen (602) eines Fensters potenziellen Diskomforts um die geschätzte Position der Wirbelschleppe herum; und
- Definieren (603) und Anwenden (605) einer Näherungstrajektorie der Wirbelschleppe; **dadurch gekennzeichnet, dass** das Fensters potenziellen Diskomforts um die geschätzte Position der Wirbelschleppe herum in Abhängigkeit von der Schätzungsunsicherheit der geschätzten Position der Wirbelschleppe bestimmt wird und das Verfahren außerdem den folgenden Schritt umfasst:
- Halten des Folgeflugzeugs (302) außerhalb des Fensters potenziellen Diskomforts durch Steuern einer Positionierung des Folgeflugzeugs (302) in einer vorgegebenen Entfernung von der geschätzten Position der Wirbelschleppe, wenn das Fenster potenziellen Diskomforts Abmessungen hat, die das ermöglichen, und andernfalls in einem vorgegebenen Abstand von dem Fenster potenziellen Diskomforts.

2. Verfahren nach Anspruch 1, wobei das Filter vom Typ eines rekursiven Bayes-Filters ein Partikelfilter ist.

3. Verfahren nach Anspruch 2, wobei das Bestimmen der geschätzten Position der Wirbelschleppe und des Fensters potenziellen Diskomforts auf folgende Weise durchgeführt wird:
- Bestimmen (705), für jede potenzielle Position aus einer Menge potenzieller Positionen, die anhand der bestimmten geometrischen Position der Wirbelschleppe bestimmt wird, eines Wahrscheinlichkeitswertes des Vorhandenseins der Wirbelschleppe an dieser potenziellen Position, wobei der betreffende Wahrscheinlichkeitswert bestimmt wird durch Vergleich des Wirbelschleppeneffekts, dem das Folgeflugzeug (302) ausgesetzt ist, und eines theoretischen Wirbelschleppeneffekts, der auf das Folgeflugzeug (302) gemäß dem Wirbelschleppenmodell wirkt, wenn die Wirbelschleppe an dieser potenziellen Position lokalisiert ist;
- Bilden des Fensters potenziellen Diskomforts durch Zusammenfassung (801) potenzieller Positionen der Wirbelschleppe mit einem Wahrscheinlichkeitswert, der größer als ein vorbestimmter erster Schwellenwert ist.

4. Verfahren nach einem der Ansprüche 1 bis 3, wobei, wenn das System (120) erkennt, dass das Fenster potenziellen Diskomforts Abmessungen hat, welche die Positionierung des Folgeflugzeugs (302) in der vorgegebenen Entfernung von der geschätzten Position der Wirbelschleppe ermöglichen, das System (120) das Folgeflugzeug (302) so steuert, dass es Bewegungen mit einem Lastfaktor ausführt, der kleiner als ein vorbestimmter zweiter Schwellenwert ist.

5. Verfahren nach Anspruch 4, wobei die betreffenden Bewegungen vorzugsweise vertikale oszillierende oder pseudo-oszillierende Bewegungen sind.

6. Computerprogrammprodukt, welches Anweisungen umfasst, die eine Implementierung des Verfahrens nach einem der Ansprüche 1 bis 5 bewirken, wenn die Anweisungen durch einen Prozessor ausgeführt werden.

7. Informationsspeichermedium, welches Anweisungen speichert, die eine Implementierung des Verfahrens nach einem der Ansprüche 1 bis 5 bewirken, wenn die Anweisungen von dem Informationsspeichermedium gelesen und durch einen Prozessor ausgeführt werden.

8. System (120) zur Unterstützung beim Formationsflug von Flugzeugen in Form von elektronischen Schaltkreisen, die in ein Flugzeug (100) integriert sind, das dazu bestimmt ist, in dem Formationsflug als Folgeflugzeug (302) zu agieren, wobei die elektronischen Schaltkreise dafür ausgelegt sind zu implementieren:
- ein Modul zum Erhalten von Informationen bezüglich eines Führungsflugzeugs (301), das eine Wirbelschleppe erzeugt, die einen aufsteigenden Luftstrom bewirkt, von dem das System das Folgeflugzeug (302) profitieren lassen soll;
- ein Modul zum Bestimmen eines Wirbelschleppeneffekts, dem das Folgeflugzeug (302) ausgesetzt ist, als Differenz zwischen Messungen, die von Sensoren (130) des Folgeflugzeugs (302) durchgeführt werden, und einer Modellierung des Folgeflugzeugs in einem wirbelschleppenfreien Umfeld;
- mithilfe eines rekursiven Bayes-Filters, ein Modul zum Bestimmen einer geschätzten Position der Wirbelschleppe anhand der erhaltenen Informationen bezüglich des Führungsflugzeugs (301) und eines Wirbelschleppenmodells und zum Bestimmen einer Schätzungsunsicherheit der geschätzten Position der Wirbelschleppe durch Vergleich des Wirbelschleppeneffekts, dem das Folgeflugzeug (302) ausgesetzt ist, und eines theoretischen Wirbelschleppeneffekts, der auf das Folgeflugzeug (302) gemäß dem Wirbelschleppenmodell wirkt;
- ein Modul zum Bestimmen eines Fensters potenziellen Diskomforts um die geschätzte Position der Wirbelschleppe herum; und
- Module zum Definieren und Anwenden einer Näherungstrajektorie der Wirbelschleppe;
**dadurch gekennzeichnet, dass** das Modul zur Bestimmen des Fensters potenziellen Diskomforts um die geschätzte Position der Wirbelschleppe herum so beschaffen ist, dass das Fenster potenziellen Diskomforts um die geschätzte Position der Wirbelschleppe herum in Abhängigkeit von der Schätzungsunsicherheit der geschätzten Position der Wirbelschleppe bestimmt wird und die elektronischen Schaltkreise außerdem dafür ausgelegt sind zu implementieren:
- ein Modul zum Halten des Folgeflugzeugs (302) außerhalb des Fensters potenziellen Diskomforts durch Steuern einer Positionierung des Folgeflugzeugs (302) in einer vorgegebenen Entfernung von der geschätzten Position der Wirbelschleppe, wenn das Fenster potenziellen Diskomforts Abmessungen hat, die das ermöglichen, und andernfalls in einem vorgegebenen Abstand von dem Fenster potenziellen Diskomforts.

9. Flugzeug (100), welches als Folgeflugzeug (302) in einem Formationsflug agiert und welches ein System zur Unterstützung beim Formationsflug nach Anspruch 8 aufweist.

## Claims

1. Method for assisting the formation flight of aircraft, the method being implemented by a system (120) in the form of electronic circuitry on board an aircraft (100) acting as a follower aircraft (302), the method comprising the following steps:
- acquiring information relating to a leader aircraft (301) generating a wake vortex inducing an upward airflow, which the system (120) intends the follower aircraft (302) to benefit from;
- determining (704) an effect of the wake vortex experienced by the follower aircraft (302) as a difference between measurements, taken by sensors (130) of the follower aircraft (302), and modelling of the follower aircraft in a wake vortex-free environment;
- determining, using a recursive Bayesian filter, an estimated position of the wake vortex on the basis of the information obtained relative to the leader aircraft (301) and of a wake vortex model, and determining an estimation uncertainty of the estimated position of the wake vortex by comparing the effect of the wake vortex experienced by the follower aircraft (302) and a theoretical effect of the wake vortex on the follower aircraft (302) according to the wake vortex model;
- determining (602) a potential discomfort window around the estimated position of the wake vortex; and
- defining (603) and applying (605) an approach trajectory to the wake vortex; **characterized in that** the potential discomfort window around the estimated position of the wake vortex is determined as a function of the estimation uncertainty of the estimated position of the wake vortex and the method further comprises the following step:
- keeping the follower aircraft (302) outside the potential discomfort window, by controlling a placement of the follower aircraft (302) at a predefined distance from the estimated position of the wake vortex when the dimensions of the potential discomfort window are such that this is allowed, and at a predefined margin from the potential discomfort window otherwise.

2. Method according to Claim 1, wherein the recursive Bayesian filter is a particle filter.

3. Method according to Claim 2, wherein the estimated position of the wake vortex and the potential discomfort window are determined as follows:
- determining (705), for each potential position from among a set of potential positions determined on the basis of the determined geometric position of the wake vortex, a probability value for the presence of the wake vortex at said potential position, with the probability value in question being determined by comparing the effect of the wake vortex experienced by the follower aircraft (302) and a theoretical effect of the wake vortex on the follower aircraft (302) according to the wake vortex model when the wake vortex is located at said potential position;
- forming the potential discomfort window by grouping together (801) potential positions of the wake vortex with a probability value above a first predetermined threshold.

4. Method according to any one of Claims 1 to 3, wherein, when the system (120) detects that the dimensions of the potential discomfort window allow the follower aircraft (302) to be placed at said predefined distance from the estimated position of the wake vortex, the system (120) commands the follower aircraft (302) to perform load factor movements below a second predetermined threshold.

5. Method according to Claim 4, wherein the movements in question are preferably vertical oscillatory or pseudo-oscillatory movements.

6. Computer program product comprising instructions causing the method according to any one of Claims 1 to 5 to be implemented, when the instructions are executed by a processor.

7. Information storage medium storing instructions causing the method according to any one of Claims 1 to 5 to be implemented, when the instructions are read from the information storage medium and executed by a processor.

8. System (120) for assisting the formation flight of aircraft, in the form of on-board electronic circuitry in an aircraft (100) intended to act as a follower aircraft (302) in the formation flight, the electronic circuitry being configured to implement:
- a module for acquiring information relating to a leader aircraft (301) generating a wake vortex inducing an upward airflow, which the system intends the follower aircraft (302) to benefit from;
- a module for determining an effect of the wake vortex experienced by the follower aircraft (302) as a difference between measurements, taken by sensors (130) of the follower aircraft (302), and modelling of the follower aircraft in a wake vortex-free environment;
- a module for determining, using a recursive Bayesian filter, an estimated position of the wake vortex on the basis of the information obtained relative to the leader aircraft (301) and of a wake vortex model, and for determining an estimation uncertainty of the estimated position of the wake vortex by comparing the effect of the wake vortex experienced by the follower aircraft (302) and a theoretical effect of the wake vortex on the follower aircraft (302) according to the wake vortex model;
- a module for determining a potential discomfort window around the estimated position of the wake vortex; and
- modules for defining and applying an approach trajectory to the wake vortex;
**characterized in that** the module for determining the potential discomfort window around the estimated position of the wake vortex is such that the potential discomfort window around the estimated position of the wake vortex is determined as a function of the estimation uncertainty of the estimated position of the wake vortex, and the electronic circuitry is further configured to implement:
- a module for keeping the follower aircraft (302) outside the potential discomfort window, by controlling a placement of the follower aircraft (302) at a predefined distance from the estimated position of the wake vortex when the dimensions of the potential discomfort window are such that this is allowed and at a predefined margin from the potential discomfort window otherwise.

9. Aircraft (100) acting as a follower aircraft (302) in formation flight, which comprises a system for assisting formation flight according to Claim 8.
